# EUROPÄISCHE PATENTSCHRIFT

(11) **EP 2 165 920 B1**
(45) Veröffentlichungstag und Bekanntmachung des Hinweises auf die Patenterteilung: **09.01.2013**
(21) Anmeldenummer: 09008605.9
(22) Anmeldetag: 01.07.2009
(51) Int. Cl.: B62D 33/067

(54) **Fahrerhauslagerung mit Wankabstützung**
Driver's cabin mount with roll support
Agencement de la cabine conducteur doté d'une stabilisation antiroulis

(30) Priorität: 17.09.2008 DE 102008047454
(43) Veröffentlichungstag der Anmeldung: 24.03.2010
(73) Patentinhaber: MAN Truck & Bus AG, 80995 München (DE)
(72) Erfinder: Beck, Klaus, 82278 Althegnenberg (DE); Nickels, Thomas, 81541 München (DE)

(56) Entgegenhaltungen:
- EP-A1- 0 798 198
- EP-A2- 1 182 064
- WO-A1-2004/089728
- WO-A1-2006/100007
- DE-A1-102006 008 090

## Beschreibung

Die Erfindung betrifft eine Vorrichtung zur Vermeidung einer Kipp-Nickbewegung gemäß den im Oberbegriff des Anspruchs 1 angegebenen Merkmalen.

Im modernen Nutzfahrzeugbau sind die Fahrerhäuser in der Regel über Feder-Dämpfer-Beine mit den Fahrgestell-Längsträgern verbunden. Um bei Frontlenker-Lastkraftwagen den Zugang zum Antriebsstrang zu ermöglichen, muss das Fahrerhaus nach vorne kippbar gelagert sein. Die Feder-Dämpfer-Beine dienen daher zur Erhöhung des Komforts des Fahrers und gleichzeitig der Verbindung des Fahrerhauses mit dem Fahrgestell.

Aus der DE 38 27 921 ist eine Kippvorrichtung für Lastkraftwagen-Fahrerhäuser bekannt, die über einen Schwenkarm verfügt, der mit einem Ende am Fahrzeugrahmen angelenkt ist und am anderen Ende mit einer heruntergeführten Fahrerhauskonsole gelenkig verbunden ist. Ein am Fahrzeugrahmen abgestützter Kippzylinder greift endseitig an einem Schwenkhebel an, der in Abstand davon an der Fahrerhauskonsole schwenkbar gelagert ist. Er hat einen abstrebenden Stützteil, der bei Kippzylinderbetätigung und Schwenkung des Schwenkhebels an einem Anschlag des Schwenkarmes anschlägt und bei fortgesetzter Kippbewegung die Konsole am Schwenkarm derart formschlüssig abstützt, dass mittels des am Schwenkhebel wirkenden Kippzylinders die Konsole und der Schwenkarm als Einheit in die Kippstellung schwenkbar sind. In dieser ist die Konsole über den Schwenkhebel formschlüssig am Schwenkarm abgestützt. Die aus einem Feder-Dämpfer-Bein bestehende vordere Abfederung wird somit entlastet.

Die EP 0 798 198 A1 offenbart eine erste Schwinge, die an ihrem hinteren Ende über einen Lagerbock am Fahrgestell angelenkt ist. Am vorderen Ende greift das erste Schwingenpaar an einer Querstabilisatorstange an.

Ferner ist in der WO 2006/100007 A1 ein erstes Schwingenpaar vorgesehen, das nur mittelbar über ein Halteprofil mit dem Fahrgestell verbunden ist. Ein Feder-Dämpfer-Bein federt das fahrerhausseitige Ende des ersten Schwingenpaars gegenüber dem Fahrgestell ab.

Aus der DE 10 2006 008 090 A1 ist über dies eine Fahrerhauslagerung eines federgedämpften Fahrerhauses eines Nutzfahrzeugs mit einem ersten Schwingenpaar bekannt. Die Stabilisatorarme sind zumindest mittelbar über die Lagerkonsole schwenkbar am Rahmenlängsträger angelenkt. Zusätzlich ist ein Wankstabilisator vorgesehen, der hinten fahrgestellfest angelenkt ist. Das Fahrerhaus ist gegenüber dem Fahrgestell und relativ zur Anlenkung des Wankstabilisators am Fahrgestell abfederbar.

Der genannte Stand der Technik dämpft somit die Kipp-Nickbewegung, die ein Lastkraftwagen mit gegenüber dem Fahrgestell abgefedertem Fahrerhaus immer dann zeigt, wenn das Fahrzeug beschleunigt oder abgebremst wird.

Nachteilig ist jedoch, dass der Stand der Technik lediglich eine Lösung bereit stellt, die Kipp-Nickbewegungen in Fahrzeuglängsachse abdämpft.

Wünschenswert wäre es vielmehr, eine Fahrerhauslagerung zu schaffen, die neben der Dämpfung der Kipp-Nickbewegung auch die unerwünschten Wankbewegungen des Fahrerhauses quer zur Fahrzeuglängsachse unterdrückt bzw. abdämpft.

Die Aufgabe wird erfindungsgemäß durch die kennzeichnenden Merkmale des Anspruchs 1 gelöst.

Das Fahrerhaus des Nutzfahrzeugs ist im modernen Nutzfahrzeugbau in Fahrtrichtung gesehen an seinem vorderen und seinem hinteren Ende gegenüber dem Fahrgestell durch Feder-Dämpfer-Beine abgefedert. Dadurch wird der Fahrkomfort des Fahrzeuglenkers wesentlich erhöht. Das Fahrerhaus ist in Fahrtrichtung gesehen vorne und hinten gleichmäßig einfederbar. Beim Beschleunigen oder Bremsen des Fahrzeugs vollzieht das Fahrerhaus um eine quer zur Fahrzeuglängsachse verlaufende Achse eine Kipp-Nickbewegung in bzw. entgegen der Fahrtrichtung, die durch die wenigstens eine erste Schwinge eingeschränkt beziehungsweise ganz unterbunden wird. Dieser Kipp-Nickbewegung wirkt wenigstens eine erste Schwinge entgegen, die an ihrem einen Ende rahmenfest angelenkt ist und deren freies Ende schwingbar mit dem Fahrerhaus verbunden ist. Vorstellbar ist, dass das freie Ende der Schwinge gegenüber dem Fahrgestell mit einem weiteren Feder-Dämpfer-Bein abgefedert ist. Beim Beschleunigen des Fahrzeugs machen herkömmliche Fahrerhäuser von Nutzfahrzeugen eine Kipp-Nickbewegung entgegen der Fahrtrichtung. Hierbei werden die in Bezug zur Fahrtrichtung gesehen vorderseitigen Federbeine entlastet, wogegen die an der Hinterseite des Fahrerhauses angeordneten Feder-Dämpfer-Beine einseitig belastet werden. Erfindungsgemäß wirkt die erste Schwinge der Kipp-Nickbewegung des Fahrerhauses in bzw. entgegen der Fahrtrichtung entgegen. Beim Bremsen des Fahrzeugs wird das freie Ende der ersten Schwinge in Richtung Fahrgestell gedrückt. Beim Beschleunigen des Fahrzeugs hingegen wird die erste Schwinge über ihr freies Ende aus einer Ruheposition nach oben vom Fahrgestell weggezogen. Die erste Schwinge wirkt dem aus dem Brems- bzw dem Beschleunigungsvorgang resultierenden negativen Einfluss auf die Ruheposition entgegen, so dass das Fahrerhaus sowohl beim Bremsen als auch beim Beschleunigen des Fahrzeugs nicht einseitig über die vorderen bzw. hinteren Feder-Dämpfer-Beine einfedert. Erfindungsgemäß ist zusätzlich ein Wankstabilisator vorgesehen, der hinten fahrgestellfest und vorne schwingbar am Fahrerhaus angelenkt ist. In diesem Zusammenhang wird davon ausgegangen, dass ein Nutzfahrzeug mit einem Fahrerhaus und einem zugehörigen Aufbau gegenüber einem herkömmlichen Fahrzeug einen erhöhten Schwerpunkt aufweist. Bei der Kurvenfahrt vollzieht das Fahrerhaus des Nutzfahrzeugs wegen des hohen Schwerpunkts des Fahrzeugs in Abhängigkeit des Kurvenradius eine mehr oder weniger starke Wankbewegung gegenüber der Fahrzeuglängsachse zum Kurvenäußeren. Der Wankstabilisator kann paarweise angeordnet sein und dabei wenigstens zwei Arme aufweisen, die über einer quer zur Fahrzeuglängsachse verlaufenden Verbindungsstrebe verbunden sind. Die Arme des Wankstabilisators verlaufen in einer Normalposition in etwa parallel zu den Längsträgern des Fahrgestells. Der Wankstabilisator ist in Bezug zur Fahrtrichtung hinten derart schwenkbar am Fahrgestell angelenkt, dass die Arme mit ihren losen Enden aus der Ebene der Normalposition des Wankstabilisators heraus nach oben bzw. nach unten herausschwenken können. Erfindungsgemäß sind die Arme des Wankstabilisators an ihren losen Enden lösbar mit dem Fahrerhaus verbunden. Vorstellbar ist, dass bei Überkippen des Fahrerhauses um eine quer zur Fahrzeuglängsachse verlaufende Kippachse die Verbindung zwischen dem Fahrerhaus und dem Wankstabilisator umkehrbar gelöst wird. Hierzu verfügen die Arme des Wankstabilisators an ihren losen Enden über entriegelbare Schlösser, in die ein Verschlusskeil des Fahrerhauses dann verschließbar eingreift, wenn sich der Wankstabilisator in der Ruheposition und das Fahrerhaus in Fahrtposition in etwa parallel zum Fahrgestell befindet. Der Verschlusskeil ist jedoch dann aus dem Schloss des jeweiligen Arms des Wankstabilisators herausführbar, wenn das Fahrerhaus um die Kippachse nach vorne übergekippt ist, um dem Fahrer den Zugang zum Motor und dem Antriebsstrang freizugeben.

Nach einer anderen Ausführungsform der Erfindung ist der Wankstabilisator als 4-Punkt-Stabilisatorlenker ausgelegt. Je nach Größe und Gewicht des Fahrerhauses ist der Wankstabilisator aber auch als 3-Punkt-Stabilisatorlenker vorstellbar oder ganz ohne Verbindungsstreben, aber mit gekreuzten Armen ausführbar. Je nach Verwendungszweck des Fahrzeugs können die Wankstabilisatoren eine unterschiedliche Verwindungssteifigkeit aufweisen.

In einer anderen Ausführungsform der Erfindung ist der Wankstabilisator als Schwingenpaar ausgebildet. Der Wankstabilisator kann dabei weniger oder mehr als zwei Arme aufweisen, die quer zur Fahrtrichtung oder diagonal durch wenigstens eine Verbindungsstrebe miteinander verbunden sind.

Eine zusätzliche Ausführungsform der Erfindung ist **dadurch gekennzeichnet, dass** zur Anlenkung des Wankstabilisators am Fahrerhaus wenigstens ein fahrerhausfester Bolzen beweglich in einem Langloch des Wankstabilisators führbar ist.

Ferner ist denkbar, zur Anlenkung des Wankstabilisators am Fahrerhaus wenigstens einen fahrerhausfesten Kulissenstein beweglich in einer im Wankstabilisator angeordneten Kulisse zu führen. Beim Kippen des Fahrerhauses um seine Kippachse bleibt auf diese Weise zur Erhöhung der Sicherheit die Verbindung zwischen dem Fahrerhaus und den Armen des Wankstabilisators erhalten. Beim Kippen des Fahrerhauses um die Kippachse wird der wenigstens eine Bolzen oder der wenigstens eine Kulissenstein in dem Langloch bzw. der Kulisse des Arms des Wankstabilisators geführt und verliersicher gehalten. In dem Maße, wie das Fahrerhaus um die Kippachse nach vorne gekippt wird, schwenken die Arme des Wankstabilisators relativ zur Fahrzeuglängsachse mit ihren losen Enden nach oben aus der Normalposition des Wankstabilisators heraus. Die Kulisse und das Langloch im Arm des Wankstabilisators sind im Bezug zur Fahrzeuglängsachse an ihren beiden Enden geschlossen, sodass der Bolzen bzw. der Kulissenstein weder aus dem Langloch noch aus der Kulisse herausführbar ist und die Verbindung zwischen Fahrerhaus und Arm des Wankstabilisators in jeder Position bestehen bleibt. Der Wankstabilisator stellt somit eine zusätzliche Sicherung des Fahrerhauses gegenüber dem Fahrgestell dar. Der Wankstabilisator kann aber auch als gezielt verformierbares Dämpfungselement ausgebildet sein, das im Fall eines Frontalcrashs die in das Fahrerhaus eingeleitete Aufprallenergie gezielt aufnimmt und ermöglicht, das Fahrerhaus um die Anlenkstellen am Fahrgestell entgegen der Fahrtrichtung zu verschwenken.

Eine weitere Ausführungsform der Erfindung sieht vor, dass die Anlenkungspunkte des ersten Schwingenpaars am Fahrgestell in Fahrtrichtung gesehen vor ihren Anlenkungspunkten am Fahrerhaus liegen. Darüber hinaus ist es jedoch auch möglich, die Anlenkungspunkte des ersten Schwingenpaars am Fahrgestell in Fahrtrichtung gesehen hinter ihren Anlenkungspunkten am Fahrerhaus anzuordnen. Insofern kann den jeweiligen Platzverhältnissen im Bereich der Anlenkung des ersten Schwingenpaars am Fahrgestell jedes einzelnen Nutzfahrzeugtyps sowie dem unterschiedlichen Gewicht der jeweiligen Fahrerhäuser Rechnung getragen werden.

Die Erfindung sieht vor, dass die Anlenkungspunkte des ersten Schwingenpaars am Fahrgestell gegenüber dem Fahrerhaus durch Feder-Dämpfer-Beine abfederbar sind. Hierdurch wird erreicht, dass die Kipp-Nickbewegung des Fahrerhauses in bzw. gegen die Fahrtrichtung neutralisierbar ist, das Fahrerhaus aber gegenüber dem Fahrgestell in vollem Umfang abfederbar bleibt.

In einer anderen Ausführungsform der Erfindung ist vorgesehen, dass die Anlenkungspunkte des ersten Schwingenpaars am Fahrerhaus unterhalb des Fahrerhausbodens liegen. Erfindungsgemäß erfährt das Fahrerhaus somit keinerlei räumliche Einschränkung. Das erste Schwingenpaar kann dabei oberhalb, in einer Ebene mit dem Fahrgestell oder unterhalb der Ebene des Fahrgestells angeordnet sein.

Nach einer anderen Ausführungsform der Erfindung sind das erste Schwingenpaar und der Wankstabilisator jeweils in unterschiedlichen Ebenen übereinander angeordnet. Hierdurch wird ermöglicht, den räumlichen Platzverbrauch durch das erste Schwingenpaar sowie den Wankstabilisator zu minimieren. Denkbar ist es, den Wankstabilisator im Bereich unter dem Fahrerarbeitsplatz anzuordnen.

Weiterhin ist vorgesehen, dass das erste Schwingenpaar mit dem Wankstabilisator in Fahrtrichtung gesehen auf einer horizontalen Ebene liegt. Eine solche Anordnung begünstigt die Wankstabilisierung von längeren Fahrerhäusern. Gleichfalls ist auch eine Wankstabilisierung von Nutzfahrzeug-Aufbauten eines Lastkraftwagens oder eines Omnibusses denkbar.

In einer weiteren Ausführungsform der Erfindung ist an der Unterseite des Fahrerhauses eine Ausnehmung vorgesehen, in die der Wankstabilisator beim Abfedern des Fahrerhauses gegenüber dem Fahrgestell eingreift. Hierdurch bleibt ein maximal möglicher Federweg des Fahrerhauses gegenüber der Anlenkung des Wankstabilisators am Fahrgestell erhalten.

Weitere Merkmale, Einzelheiten und Vorteile der Erfindung ergeben sich aus der folgenden Beschreibung verschiedener Ausführungsformen der Erfindung sowie anhand der Zeichnung. Hierbei zeigen:
- Fig. 1: schematisiert dargestellt, in Seitenansicht ein gefedertes Fahrerhaus mit einem ersten Schwingenpaar und dem erfindungsgemäßen Wankstabilisator und
- Fig. 2: in perspektivischer Darstellung schematisiert ein Fahrerhaus mit einem ersten Schwingenpaar und einem Wankstabilisator.

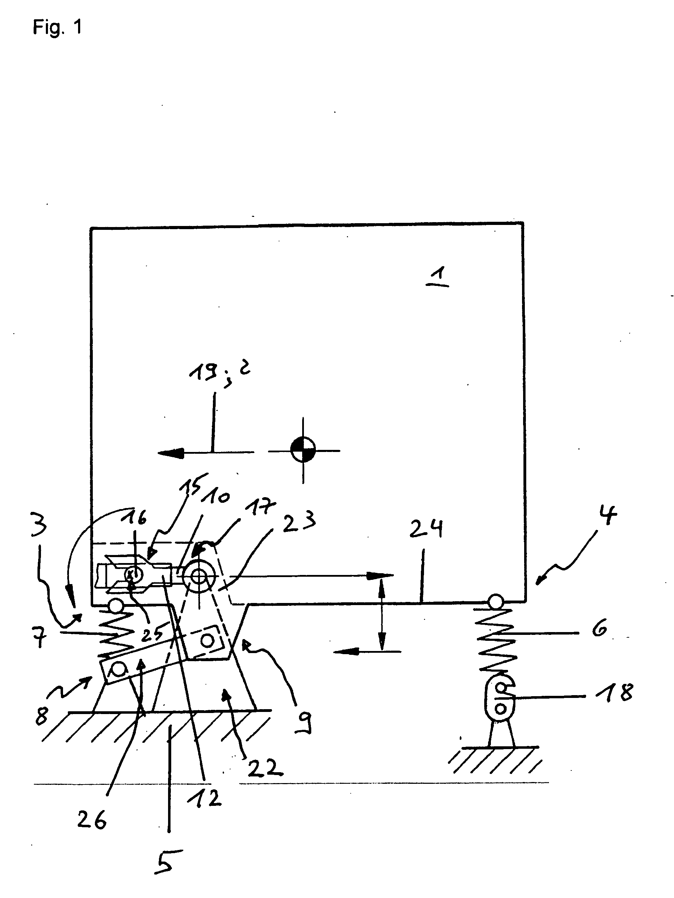

Fig. 1 zeigt in schematisierter Darstellung in Seitenansicht ein Fahrerhaus 1, das über vordere und hintere Feder-Dämpfer-Beine 7; 6 gegenüber einem Fahrgestell 5 abgefedert ist. Das hintere Feder-Dämpfer-Bein 6 ist über eine Verriegelung 18 lösbar mit dem Fahrgestell 5 verbunden. Am vorderen Ende 3 des Fahrerhauses 1 ist ein erstes Schwingenpaar 26 an seinem einen Ende 8 rahmenfest schwingbar angelenkt und an seinem freien Ende 9 ebenfalls schwingbar mit dem Fahrerhaus 1 verbunden. Anstatt eines Schwingenpaars 26 kann auch eine einzelne Schwinge oder es können mehr als zwei Schwingen vorgesehen sein. Im Weiteren wird jedoch vereinfachend von einem Schwingenpaar 26 ausgegangen. Die am Ende 8 vorgesehene rahmenfeste Anlenkung des ersten Schwingenpaars 26 ist über das vordere Feder-Dämpfer-Bein 7 gegenüber dem Fahrerhaus 1 abgefedert. Das erste Schwingenpaar 26 ist in der Fig. 1 unterhalb des Fahrerhauses 1 angeordnet. Dabei weist der Anlenkungspunkt des ersten Schwingenpaars 26 an ihrem einen Ende 8 gegenüber dem Fahrgestell 5 einen geringeren vertikalen Abstand auf, als ihr freies Ende 9.

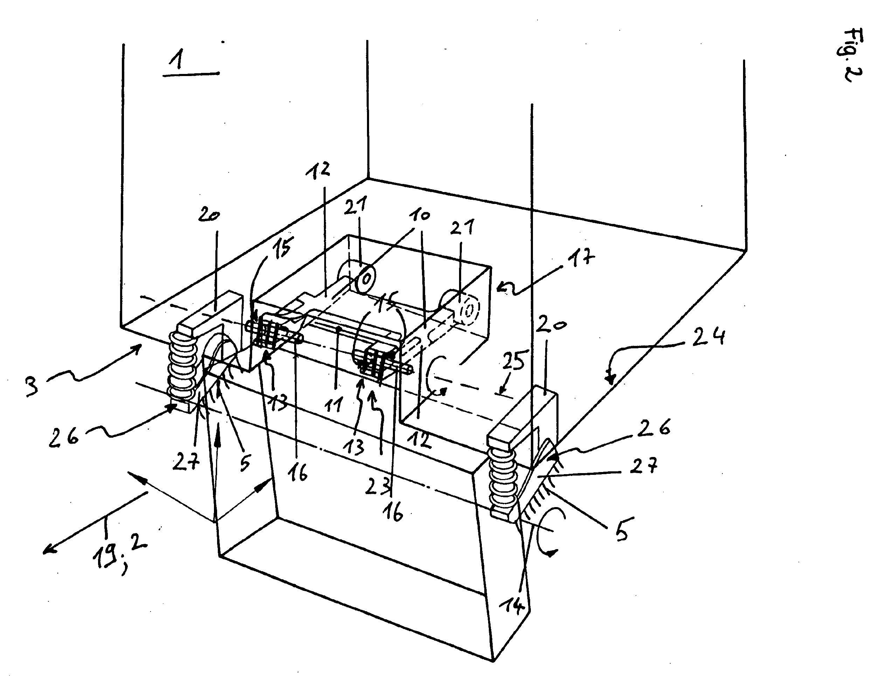

Fig. 2 zeigt in perspektivischer Darstellung in Gesamtansicht das Fahrerhaus mit einem ersten Schwingenpaar 26 am vorderen Ende 3 des Fahrerhauses 1. Das erste Schwingenpaar 26 weist dabei beiderseits der Fahrzeuglängsachse 19 je eine Schwinge 27 auf. Die Schwingen 27 sind dabei jeweils mit einer Konsole 20 verbunden, auf der das Fahrerhaus 1 aufliegt. In Fahrtrichtung 2 gesehen am vorderen Ende 8 sind die Schwingen 27 rahmenfest angelenkt und über die vorderen Feder-Dämpfer-Beine 7 gegenüber dem Fahrerhaus 1 abgefedert. In rückwärtiger Richtung sind die Schwingen 27 schwingbar an den Konsolen 20 angelenkt. Quer zur Fahrzeuglängsachse 19 verläuft durch die rahmenfest angelenkten Enden 8 der Schwingen 26 die Kippachse 14, um die das Fahrerhaus 1 nach vorne kippbar ist, um den Zugang zum Motor bzw. zum Antriebsstrang freizugeben. Relativ zur Fahrzeuglängsachse 19 ist oberhalb des ersten Schwingenpaars 26 der Wankstabilisator 12 in Normalposition 17 dargestellt. In Fig. 2 weist der Wankstabilisator 12 zwei Arme 10 auf, die in Fahrtrichtung 2 gesehen vorne über eine Verbindungsstrebe 11 verbunden sind. In Fahrtrichtung 2 gesehen sind die Arme 10 des Wankstabilisators 12 hinten über Anlenkungspunkte 21 rahmenfest angelenkt.

Wie in Fig. 1 dargestellt ist, können die Arme 10 des Wankstabilisators 12 schwenkbar an Podesten 22 angelenkt sein, die fest mit dem Fahrgestell 5 verbunden sind. In der Normalposition 17 verläuft der Wankstabilisator 12 wie in Fig. 1 und Fig. 2 dargestellt, in etwa parallel zum Fahrgestell 5 und greift dabei in eine Ausnehmung 23 des Fahrerhauses 1 ein. Der vertikale Abstand des Wankstabilisators 12 zur Oberseite der Ausnehmung 23 bestimmt den Federweg des Fahrerhauses 1 gegenüber dem rahmenfesten Wankstabilisator 12. In den Fig. 1 und 2 ist das Fahrerhaus 1 jeweils in fahrbereiter Position dargestellt, wobei der Fahrerhausboden 24 in etwa parallel zum Fahrgestell 5 verläuft. In dieser Position greift wie in Fig. 1 und Fig. 2 zu erkennen ist, je ein fahrerhausfester Verschlusskeil 16 in ein am vorderen Ende 3 des Fahrerhauses 1 vorgesehenes Schloss 15 des Arms 10 ein. In Fig. 1 und Fig. 2 verläuft die Nickachse 25 der durch die erfindungsgemäße Vorrichtung zu unterdrückenden Kipp-Nickbewegung quer zur Fahrzeuglängsachse 19 im Bereich der Schlösser 15 der Arme 10 des Wankstabilisators 12.

### Bezugszeichen:

- 1: Fahrerhaus
- 2: Fahrtrichtung
- 3: vorderes Ende des Fahrerhauses
- 4: hinteres Ende des Fahrerhauses
- 5: Fahrgestell
- 6: Feder-Dämpfer-Bein hinten
- 7: Feder-Dämpfer-Bein vorne
- 8: rahmenfestes Ende der Schwinge
- 9: freies Ende der Schwinge
- 10: Arm
- 11: Verbindungsstelle
- 12: Wankstabilisator
- 13: loses Ende des Arms
- 14: Kippachse
- 15: Schloss
- 16: Verschlusskeil
- 17: Normalposition
- 18: Verriegelung
- 19: Fahrzeuglängsachse
- 20: Konsole
- 21: Anlenkungspunkt
- 22: Podest
- 23: Ausnehmung
- 24: Fahrerhausboden
- 25: Nickachse
- 26: erstes Schwingenpaar
- 27: Schwingen

## Patentansprüche

1. Vorrichtung zur Vermeidung einer Kipp-Nickbewegung eines gegenüber dem Fahrgestell (5) federgedämpften Fahrerhauses (1) eines Nutzfahrzeugs, um eine quer zur Fahrzeuglängsachse (19) verlaufenden Achse (25) bei Änderung der Geschwindigkeit, wobei das Fahrerhaus (1) über wenigstens ein erstes Schwingenpaar (26) in Fahrtrichtung (2) schwingbar am Fahrgestell (5) angelenkt ist und ein Wankstabilisator (12) hinten fahrgestellfest angelenkt ist und das Fahrerhaus (1) vertikal gegenüber dem Fahrgestell (5) und relativ zur Anlenkung des Wankstabilisators (12) am Fahrgestell (5) abfederbar ist, **dadurch gekennzeichnet, dass** der Wankstabilisator (12) vorne am Fahrerhaus (1) schwingbar angelenkt ist und Anlenkungspunkte des ersten Schwingenpaars (26) am Fahrgestell (5) gegenüber einer Konsole (20) des Fahrerhauses (1) durch Feder-Dämpfer-Beine (6; 7) abfederbar sind.

2. Vorrichtung nach Anspruch 1, **dadurch gekennzeichnet, dass** der Wankstabilisator (12) als 4-Punkt-Stabilisatorlenker ausgelegt ist.

3. Vorrichtung nach Anspruch 1, **dadurch gekennzeichnet, dass** der Wankstabilisator (12) als Schwingenpaar ausgebildet ist.

4. Vorrichtung nach Anspruch 1, **dadurch gekennzeichnet, dass** zur Anlenkung des Wankstabilisators (12) am Fahrerhaus (1) wenigstens ein fahrerhausfester Bolzen beweglich in einem Langloch des Wankstabilisators (12) führbar ist.

5. Vorrichtung nach Anspruch 1, **dadurch gekennzeichnet, dass** zur Anlenkung des Wankstabilisators (12) am Fahrerhaus (1) wenigstens ein fahrerhausfester Kulissenstein beweglich in einer Kulisse des Wankstabilisators (12) führbar ist.

6. Vorrichtung nach Anspruch 1, **dadurch gekennzeichnet, dass** zur lösbaren Anlenkung des Fahrerhauses (1) am Wankstabilisator (12) in Fahrtrichtung (2) gesehen, ein fahrerhausfester Verschlusskeil (16) in ein an der Frontseite des Wankstabilisators (12) angeordnetes Schloss (15) einführbar ist.

7. Vorrichtung nach Anspruch 1, **dadurch gekennzeichnet, dass** die Anlenkungspunkte (21) des ersten Schwingenpaars (26) am Fahrgestell (5) in Fahrtrichtung (2) gesehen vor ihren Anlenkungspunkten (21) am Fahrerhaus (1) liegen.

8. Vorrichtung nach Anspruch 1, **dadurch gekennzeichnet, dass** die Anlenkungspunkte (21) des ersten Schwingenpaars (26) am Fahrgestell (5) in Fahrtrichtung (2) hinter ihren Anlenkungspunkten (21) am Fahrerhaus (1) liegen.

9. Vorrichtung nach einem oder mehreren der vorhergehenden Ansprüche 1, 7 und 8, **dadurch gekennzeichnet, dass** die Anlenkungspunkte (21) des ersten Schwingenpaars (26) am Fahrgestell (5) gegenüber dem Fahrerhaus (1) durch Federdämpferbeine (7) abfederbar sind.

10. Vorrichtung nach einem oder mehreren der vorhergehenden Ansprüche 1, 7, 8 und 9, **dadurch gekennzeichnet, dass** die Anlenkungspunkte (21) des ersten Schwingenpaars (26) am Fahrerhaus (1) unterhalb des Fahrerhausbodens (24) liegen.

11. Vorrichtung nach Anspruch 1, **dadurch gekennzeichnet, dass** das erste Schwingenpaar (26) und der Wankstabilisator (12) jeweils in unterschiedlichen Ebenen übereinander angeordnet sind.

12. Vorrichtung nach Anspruch 11, **dadurch gekennzeichnet, dass** die jeweiligen Anlenkungspunkte (21) des Wankstabilisators (12) mit den jeweiligen Anlenkungspunkten (21) des ersten Schwingenpaars (26) in Flucht übereinander angeordnet sind.

13. Vorrichtung nach Anspruch 1, **dadurch gekennzeichnet, dass** das erste Schwingenpaar (26) mit dem Wankstabilisator (12) in Fahrtrichtung (2) gesehen auf einer horizontalen Ebene liegt.

14. Vorrichtung nach Anspruch 1, **dadurch gekennzeichnet, dass** an der Unterseite des Fahrerhauses (1) eine Ausnehmung (23) vorgesehen ist, in die der Wankstabilisator (12) beim Abfedern des Fahrerhauses (1) gegenüber dem Fahrgestell (5) eingreifbar ist.

## Claims

1. Apparatus for avoiding a tilting/pitching movement of a driver's cab (1) of a commercial vehicle, which driver's cab (1) is spring-damped with respect to the chassis (5), about an axis (25), which extends transversely with respect to the vehicle longitudinal axis (19), in the event of a change in speed, the driver's cab (1) being articulated on the chassis (5) via at least one first linkage pair (26) such that it can swing in the driving direction (2), and an anti-roll bar (12) being attached at the rear in a manner which is articulated and fixed to the chassis, and it being possible for the driver's cab (1) to be cushioned vertically with respect to the chassis (5) and relative to the articulated connection of the anti-roll bar (12) on the chassis (5), **characterized in that** the anti-roll bar (12) is articulated at the front on the driver's cab (1) such that it can swing, and articulation points of the first linkage pair (26) on the chassis (5) can be cushioned by spring/damper struts (6; 7) with respect to a bracket (20) of the driver's cab (1).

2. Apparatus according to Claim 1, **characterized in that** the anti-roll bar (12) is designed as a 4-point stabilizer link.

3. Apparatus according to Claim 1, **characterized in that** the anti-roll bar (12) is configured as a linkage pair.

4. Apparatus according to Claim 1, **characterized in that**, in order to articulate the anti-roll bar (12) on the driver's cab (1), at least one pin which is fixed to the driver's cab can be guided movably in a slot of the anti-roll bar (12).

5. Apparatus according to Claim 1, **characterized in that**, in order to articulate the anti-roll bar (12) on the driver's cab (1), at least one sliding block which is fixed to the driver's cab can be guided movably in a guide piece of the anti-roll bar (12).

6. Apparatus according to Claim 1, **characterized in that**, as viewed in the driving direction (2), a closure wedge (16) which is fixed to the driver's cab can be inserted into a lock (15) which is arranged on the front side of the anti-roll bar (12) for the releasable articulation of the driver's cab (1) on the anti-roll bar (12).

7. Apparatus according to Claim 1, **characterized in that** the articulation points (21) of the first linkage pair (26) on the chassis (5) lie in front of their articulation points (21) on the driver's cab (1) as viewed in the driving direction (2).

8. Apparatus according to Claim 1, **characterized in that** the articulation points (21) of the first linkage pair (26) on the chassis (5) lie behind their articulation points (21) on the driver's cab (1) in the driving direction (2).

9. Apparatus according to one or more of the preceding Claims 1, 7 and 8, **characterized in that** the articulation points (21) of the first linkage pair (26) on the chassis (5) can be cushioned by spring/damper struts (7) with respect to the driver's cab (1).

10. Apparatus according to one or more of the preceding Claims 1, 7, 8 and 9, **characterized in that** the articulation points (21) of the first linkage pair (26) on the driver's cab (1) lie below the driver's cab floor (24).

11. Apparatus according to Claim 1, **characterized in that** the first linkage pair (26) and the anti-roll bar (12) are arranged above one another in each case in different planes.

12. Apparatus according to Claim 11, **characterized in that** the respective articulation points (21) of the anti-roll bar (12) are arranged above one another in alignment with the respective articulation points (21) of the first linkage pair (26).

13. Apparatus according to Claim 1, **characterized in that** the first linkage pair (26) lies on one horizontal plane with the anti-roll bar (12) as viewed in the driving direction (2).

14. Apparatus according to Claim 1, **characterized in that** a recess (23) is provided on the underside of the driver's cab (1), into which recess (23) the anti-roll bar (12) can engage during the cushioning of the driver's cab (1) with respect to the chassis (5).

## Revendications

1. Dispositif pour éviter un mouvement de basculement-inclinaison d'une cabine de conducteur (1) d'un véhicule utilitaire, amortie par ressort vis-à-vis du châssis (5), autour d'un axe (25) s'étendant transversalement à l'axe longitudinal (19) du véhicule lors d'une variation de la vitesse, la cabine de conducteur (1) étant articulée par le biais d'au moins une première paire de bielles oscillantes (26) dans la direction de conduite (2) de manière oscillante au châssis (5) et un stabilisateur antiroulis (12) étant articulé à l'arrière de manière fixée au châssis, et la cabine de conducteur (1) pouvant être suspendue sur ressort par rapport au châssis (5) et par rapport à l'articulation du stabilisateur antiroulis (12) sur le châssis (5), **caractérisé en ce que** le stabilisateur antiroulis (12) est articulé de manière pivotante à l'avant à la cabine de conducteur (1) et des points d'articulation de la première paire de bielles oscillantes (26) au châssis (5) peuvent être suspendus sur ressort par rapport à une console (20) de la cabine de conducteur (1) par des jambes de suspension à ressort (6 ; 7).

2. Dispositif selon la revendication 1, **caractérisé en ce que** le stabilisateur antiroulis (12) est réalisé sous forme de bras oscillant stabilisateur à 4 points.

3. Dispositif selon la revendication 1, **caractérisé en ce que** le stabilisateur antiroulis (12) est réalisé sous forme de paire de bielles oscillantes.

4. Dispositif selon la revendication 1, **caractérisé en ce que** pour l'articulation du stabilisateur antiroulis (12) à la cabine de conducteur (1), au moins un boulon fixé à la cabine de conducteur peut être guidé de manière déplaçable dans un trou oblong du stabilisateur antiroulis (12).

5. Dispositif selon la revendication 1, **caractérisé en ce que** pour l'articulation du stabilisateur antiroulis (12) à la cabine de conducteur (1), au moins un coulisseau fixé à la cabine de conducteur peut être guidé de manière déplaçable dans une coulisse du stabilisateur antiroulis (12).

6. Dispositif selon la revendication 1, **caractérisé en ce que** pour l'articulation desserrable de la cabine de conducteur (1) au stabilisateur antiroulis (12), vu dans la direction de conduite (2), une clavette de fermeture (16) fixée à la cabine de conducteur peut être introduite dans une serrure (15) disposée sur le côté avant du stabilisateur antiroulis (12).

7. Dispositif selon la revendication 1, **caractérisé en ce que** les points d'articulation (21) de la première paire de bielles oscillantes (26) au châssis (5), vus dans la direction de conduite (2), se situent en avant de leurs points d'articulation (21) à la cabine de conduite (1).

8. Dispositif selon la revendication 1, **caractérisé en ce que** les points d'articulation (21) de la première paire de bielles oscillantes (26) au châssis (5), dans la direction de conduite (2), se situent derrière leurs points d'articulation (21) à la cabine de conduite (1).

9. Dispositif selon l'une quelconque ou plusieurs des revendications précédentes 1, 7 et 8, **caractérisé en ce que** les points d'articulation (21) de la première paire de bielles oscillantes (26) au châssis (5) peuvent être suspendus sur ressort par rapport à la cabine de conduite (1) par des jambes de suspension à ressort (7).

10. Dispositif selon l'une quelconque ou plusieurs des revendications précédentes 1, 7, 8 et 9, **caractérisé en ce que** les points d'articulation (21) de la première paire de bielles oscillantes (26) à la cabine de conduite (1) se situent sous le plancher de la cabine de conduite (24).

11. Dispositif selon la revendication 1, **caractérisé en ce que** la première paire de bielles oscillantes (26) et le stabilisateur antiroulis (12) sont disposés l'un au-dessus de l'autre dans des plans différents.

12. Dispositif selon la revendication 11, **caractérisé en ce que** les points d'articulation respectifs (21) du stabilisateur antiroulis (12) sont disposés en affleurement l'un au-dessus de l'autre avec les points d'articulation respectifs (21) de la première paire de bielles oscillantes (26).

13. Dispositif selon la revendication 1, **caractérisé en ce que** la première paire de bielles oscillantes (26) est située sur un plan horizontal avec le stabilisateur antiroulis (12), vu dans la direction de conduite (2).

14. Dispositif selon la revendication 1, **caractérisé en ce qu'**un évidement (23) est prévu sur le côté inférieur de la cabine de conduite (1), dans lequel le stabilisateur antiroulis (12) peut être engagé lors de la suspension sur ressort de la cabine de conduite (1) par rapport au châssis (5).
